# EUROPÄISCHE PATENTANMELDUNG

(11) **EP 2 563 098 A2**
(43) Veröffentlichungstag der Anmeldung: **27.02.2013**
(21) Anmeldenummer: 12181804.1
(22) Anmeldetag: 24.08.2012
(51) Int. Cl.: H05B 37/02, H04N 5/58

(54) **Verfahren zur Steuerung einer optischen Ausgabeeinrichtung**

(30) Priorität: 24.08.2011 DE 102011111054
(71) Anmelder: Deutsche Telekom AG, 53113 Bonn (DE)
(72) Erfinder: Hofmann, Tobias, 53111 Bonn (DE); Lihs, Martin, 99423 Weimar (DE); Heydekamp, Ole, 64289 Darmstadt (DE); Schwartz, Robert, 65195 Wiesbaden (DE); Zelmer, Tobias, 50283 Köln (DE)
(74) Vertreter: Schrooten, Rolf

(57) **Zusammenfassung**

Die Erfindung betrifft ein Verfahren zur Steuerung mindestens eines Parameters einer optischen Ausgabeeinrichtung, die zu einer Vorrichtung gehört oder an eine Vorrichtung anschließbar ist, wobei Daten bezüglich mindestens einer Eigenschaft einer Oberfläche, die zumindest ein Teil eines Gehäuses der Vorrichtung ist, erfasst und derart verarbeitet werden, dass der Parameter der Ausgabeeinrichtung anhand dieser erfassten Daten gesteuert wird. Die Erfindung betrifft ferner eine Vorrichtung, mit der dieses Verfahren durchführbar ist.

## Beschreibung

Die vorliegende Erfindung betrifft ein Verfahren nach dem Oberbegriff von Anspruch 1 sowie eine Vorrichtung nach dem Oberbegriff von Anspruch 6. Insbesondere betrifft die Erfindung das Anpassen von durch eine optische Ausgabeeinrichtung ausgegebenen Signalen an mindestens eine bestimmte Eigenschaft der Oberfläche des Gehäuses einer zu der Ausgabeeinrichtung zugehörigen Vorrichtung.

Eine Anpassung von Ausgabeeinrichtungen, wie z. B. Leuchteinrichtungen, an Eigenschaften einer Vorrichtung ist aus dem Bereich der Unterhaltungselektronik bekannt. Die Offenlegungsschriften WO 2004/006570 A1 und WO 2006/003624 A1 offenbaren jeweils ein Fernsehgerät, das eine seitlich um dem Bildschirm herum angeordnete Leuchtmittelanordnung aufweist, wobei die Farbe des von den Leuchtmitteln emittierten Lichts an die vorherrschend auf dem Bildschirm angezeigte Farbe angepasst werden kann. Auf diese Weise wird die Umgebung des Fernsehgeräts in einer Farbe ausgeleuchtet, die der Farbe des Bildschirms entspricht, wodurch das Auge des Betrachters geschont werden soll.

Aus der EP 2 264 560 A1 ist ferner eine Vorrichtung bekannt, die ein Gehäuse umfasst, welches zumindest teilweise optisch transparent ist, so dass sich Licht durch den optisch transparenten Teil des Gehäuses nach außen ausbreiten kann und bei Betrachten der Außenfläche der Vorrichtung sichtbar ist. Die Vorrichtung umfasst ferner eine steuerbare Lichtquellenanordnung, die Licht in verschiedenen Farben erzeugt und so konfiguriert ist, dass sie das erzeugte Licht in den optisch transparenten Teil des Gehäuses einkoppelt. Die Vorrichtung enthält darüber hinaus eine Steuereinheit und ein Farbwahrnehmungssystem, welches derart konfiguriert ist, dass es eine Umgebung der Vorrichtung optisch beobachtet und Daten, die sich auf Farben der beobachteten Umgebung beziehen, ausgibt. Die Steuereinheit ist so konfiguriert, dass sie eine von der Lichtquellenanordnung zu erzeugende Gehäusefarbe steuert, wobei die Gehäusefarbe in Abhängigkeit der von dem Farbwahrnehmungssystem empfangenen Daten ermittelt wird. Es erfolgt hier also praktisch eine Anpassung der Gehäusefarbe an die Farbe der Umgebung der Vorrichtung.

Aus der US 2007/0229531 A1 ist ein drahtloses Endgerät bekannt, dessen Display in Bezug auf die Farbe personalisiert werden kann. Zu diesem Zweck kann mit Hilfe einer Kamera ein digitales Bild aufgenommen werden, das dann in dem Gerät gespeichert und zur farblichen Anpassung der Darstellungen auf dem Display verwendet wird.

Diese bekannten Vorrichtungen und Verfahren sind aber nicht in der Lage, eine optische Ausgabeeinrichtung, wie z. B. ein Display, an bestimmte Eigenschaften der äußeren Oberfläche der jeweiligen Vorrichtung anzupassen.

Es ist daher Aufgabe der Erfindung, ein Verfahren und eine Vorrichtung zur Steuerung mindestens eines Parameters einer optischen Ausgabeeinrichtung bereitzustellen, bei denen die Steuerung in Abhängigkeit einer bestimmten Eigenschaft der Oberfläche der Vorrichtung erfolgt.

Diese Aufgabe wird erfindungsgemäß durch ein Verfahren nach Anspruch 1 gelöst. Vorteilhafte Ausgestaltungen und Weiterbildungen der Erfindung ergeben sich aus den hiervon abhängigen Ansprüchen.

Wesentlich bei der erfindungsgemäßen Lösung ist es, dass Daten bezüglich mindestens einer Eigenschaft einer inneren und/oder äußeren Oberfläche, die zumindest einen Teil des Gehäuses der Vorrichtung bildet, erfasst und derart verarbeitet werden, dass der Parameter der Ausgabeeinrichtung anhand dieser erfassten Daten gesteuert wird.

Erfindungsgemäß erfolgt also eine automatische und einfache Anpassung eines Parameters einer Ausgabeeinrichtung eines Geräts, beispielsweise der Grundtonalität (Primärfarbe) eines Mobiltelefondisplays, an eine Eigenschaft der Oberfläche des Geräts, beispielsweise an die Farbe des Gehäuses.

Ein Benutzer der Vorrichtung muss also selbst keine entsprechende Einstellung bzw. Änderung an dem Gerät vornehmen, so dass die Bedienung vereinfacht wird. Vorzugsweise wird auf diese Weise nur eine anfängliche Anpassung des mindestens einen angezeigten Parameters vorgenommen, die der Benutzer auf eigenen Wunsch beliebig abändern kann.

Darüber hinaus muss auch der Hersteller, beispielsweise beim Ausstatten eines Geräts mit einem Gehäuse in bestimmter Farbe, keine spezifische Komponente wählen, sondern kann eine universelle Komponente verbauen, die sich dann automatisch an das jeweilige Gehäuse anpasst. Hierdurch wird die Herstellung der Vorrichtung erheblich vereinfacht.

In vorteilhafter Ausgestaltung des erfindungsgemäßen Verfahrens ist vorgesehen, dass die Eigenschaft der Oberfläche und der Parameter der Ausgabeeinrichtung jeweils mindestens ein optisch wahrnehmbares Signal umfassen, wobei das von der Ausgabeeinrichtung ausgegebene Signal anhand der Daten an das Signal der Oberfläche angepasst wird. Vorzugsweise umfasst das Signal mindestens eine Farbe und/oder mindestens eine Form und/oder mindestens eine Struktur der Oberfläche.

In einer besonders bevorzugten Ausführungsform der Erfindung ist dabei vorgesehen, dass das Signal mittels einer Einrichtung zur Erkennung optischer Signale erfasst und ein an das erfasste Signal angepasstes Signal auf einem Fernsehbildschirm, einem Computermonitor und/oder einem sonstigen Display angezeigt wird. Beispielsweise kann die Farbe oder Oberflächenstruktur eines Mobiltelefongehäuses mittels eines Fotosensors erfasst werden, woraufhin dann das Hintergrundbild des Telefondisplays an die Farbe und/oder an die Struktur der Gehäuseoberfläche angepasst wird. Bei einem möglichen Wechsel des Gehäuses (Wechselschale) erfolgt dann die erneute Anpassung der Anzeige an das neue Gehäuse automatisch. Alternativ kann das jeweilige Gehäuse aber beispielsweise auch mit einem Barcode versehen sein, in dem die Gehäusefarbe verschlüsselt ist. Die Farbdaten werden in diesem Fall erfindungsgemäß von einem geeigneten Scanner gelesen und dann entsprechend verarbeitet.

Vorzugsweise umfasst das angezeigte Signal einen Hintergrund einer Benutzeroberfläche, beispielsweise die Primärfarbe eines graphisch gestalteten Benutzermenüs.

So kann mit einem computerimplementierten automatisierten Verfahren vorteilhafterweise die Farbe eines Teils der inneren und/oder äußeren Oberfläche eines Gehäuses einer elektronischen Vorrichtung, die eine graphische Benutzeroberfläche aufweist oder an eine graphische Benutzeroberfläche anschließbar ist, erfasst werden, und davon abhängig zumindest die Hintergrundfarbe der Benutzeroberfläche vollständig oder teilweise an die erfasste Farbe des Gehäuses angepasst werden.

Die Aufgabe wird erfindungsgemäß ferner durch eine Vorrichtung nach Anspruch 7 gelöst. Vorteilhafte Ausgestaltungen und Weiterbildungen hierzu ergeben sich aus den hiervon abhängigen Ansprüchen 8 bis 11. Wesentlich bei dieser erfindungsgemäßen Lösung ist es, dass die Erfassungseinrichtung derart ausgebildet ist, dass durch sie Daten bezüglich mindestens einer Eigenschaft der äußeren und/oder inneren Oberfläche des Gehäuses der Vorrichtung erfasst und an die Steuereinheit übermittelt werden können, wobei die Steuereinheit derart konfiguriert ist, dass durch sie die Ausgabeeinrichtung anhand der erfassten Daten zumindest teilweise gesteuert werden kann.

Die erfindungsgemäße Vorrichtung ermöglicht durch diesen Aufbau eine automatische Anpassung ihrer Ausgabeeinrichtung, z. B. eines Displays, an die jeweilige Hardware, indem die benötigte Information für die Anpassung in Abhängigkeit von den erfassten Daten aus einer internen oder aus einer externen Speichereinrichtung ausgelesen werden.

In vorteilhafter Ausgestaltung der erfindungsgemäßen Vorrichtung ist vorgesehen, dass die Erfassungseinrichtung eine Einrichtung zur Erkennung optischer Signale umfasst, vorzugsweise einen Fotosensor und/oder eine Fotokamera und/oder einen anderen optischen Sensor. Auf diese Weise können mindestens eine Farbe und/oder eine Form und/oder mindestens eine Oberflächenstruktur der äußeren und/oder inneren Oberfläche der Vorrichtung unmittelbar erfasst und anschließend die entsprechenden Daten verarbeitet werden.

Beispielsweise kann ein Fotosensor die Farbe des Gehäuses einer Settop-Box erfassen und daraufhin die Grundtonalität des Benutzermenüs auf einem Bildschirm an die Farbe der Gehäuseoberfläche angepasst werden. Wird das Gerät mit einem andersfarbigen Gehäuse ausgeliefert, erfolgt die Anpassung der Anzeige an die andere Farbe in vorteilhafter Weise automatisch, ohne dass herstellerseitig besondere Einstellungen oder Änderungen im Produktionsprozess vorgenommen werden müssen.

Alternativ kann das jeweilige Gehäuse aber beispielsweise auch mit einem Barcode versehen sein, in dem die Gehäusefarbe verschlüsselt ist. Die Farbdaten werden in diesem Fall erfindungsgemäß von einem geeigneten Barcode-Scanner gelesen und dann entsprechend verarbeitet.

In alternativer Ausgestaltung der erfindungsgemäßen Vorrichtung ist vorgesehen, dass die Erfassungseinrichtung ein Lesegerät umfasst, vorzugsweise einen RFID-Reader oder einen mechanischen Abtaster. In diesen Fällen ist das Gehäuse an seiner Innenseite mit einem RFID-Transponder, der die Information bezüglich der Eigenschaft der äußeren Oberfläche gespeichert hat, oder beispielsweise einem an einer bestimmten Stelle angebrachten Stift bzw. einer Erhebung versehen, so dass das entsprechende Lesegerät, die verschlüsselte Information bezüglich der äußeren Oberfläche erfassen kann. Anstelle eines RFID-Transponders kann aber auch jede andere permanente Speichervorrichtung mit einem entsprechenden Lesegerät verwendet werden.

Vorzugsweise umfasst die optische Ausgabeeinrichtung einen Fernsehbildschirm, einen Computermonitor und/oder ein sonstiges Display.

Eine elektronische Vorrichtung kann somit vorteilhafterweise so eingerichtet sein, dass mittels der integrierten Erfassungseinrichtung die Farbe zumindest eines Teils der inneren und/oder äußeren Oberfläche des Vorrichtungsgehäuses erfasst wird, und dass zumindest die Hintergrundfarbe einer auf der Ausgabeeinrichtung anzeigbaren Benutzeroberfläche von der Steuereinheit automatisch an die erfasste Farbe des Gehäuses angepasst wird.

Die Vorrichtung kann insbesondere auch durch ein Mobiltelefon gebildet sein, wobei zumindest die Hintergrundfarbgebung des Displays von der Steuereinheit automatisch an die erfasste Eigenschaft des Gehäuses angepasst wird. Hierbei ergibt sich ein besonderer Vorteil bei der Verwendung von auswechselbaren Gehäuseschalen des Mobiltelefons, indem nach jedem Wechsel die Eigenschaft bzw. Farbe einer neu angebrachten Gehäuseschale erfasst und zur farblichen Anpassung des Displays des Mobiltelefons genutzt wird.

Die Erfindung wird im Weiteren anhand der nachfolgend beschriebenen Ausführungsform beispielhaft näher erläutert.

In einer bevorzugten Ausführungsform der Erfindung erfolgt eine automatische Anpassung der Grundtonalität (Primärfarbe) einer graphischen Benutzerschnittstelle (z. B. Benutzermenüs in Internetfernsehsystemen) an die Gehäusefarbe eines Endgerätes, wie beispielsweise eines Mobiltelefons, einer Settop-Box, eines Fernsehgeräts oder Ähnlichem. In der Regel werden Endgeräte in verschiedenen Farben bzw. Designs angeboten und ausgeliefert, so dass sich der Kunde bewusst für eine bestimmte farbliche und/oder graphische Gestaltung des Endgeräts entscheiden kann.

Erfindungsgemäß wird dann die Gehäusefarbe im Benutzermenü als Primärfarbe zur Bestimmung der Grundtonalität eingesetzt. Dies geschieht automatisch, da die Gehäusefarbe durch eine geeignete Erfassungseinrichtung in verschlüsselter Form erfasst wird und die entsprechenden Daten an eine Steuereinheit (Prozessor) übermittelt werden. Anhand dieser Daten werden die benötigten Informationen zur Anpassung des Benutzermenüs aus einem internen Speicher ausgelesen, so dass die Steuereinheit die Ausgabeeinrichtung entsprechend steuern kann.

Die Farbinformation kann auch über eine Datenverbindung, wie beispielsweise DSL, 3G/4G oder Ähnliches, an einen externen Server bzw. eine entsprechende Infrastruktur (in die Wolke) gesendet werden, so dass auch andere Dienste derart voreingestellt werden können, dass auch diese auf die Gehäusefarbe abgestimmt sind. Wird die Farbinformation direkt über die Datenverbindung an den externen Server / die entsprechende Infrastruktur gesendet, so kann die Information auch dort verarbeitet und dann das entsprechende Steuersignal für das Benutzermenü direkt an das Endgerät gesendet werden. Auch die Anzeigeeinrichtungen weiterer Endgeräte oder Vorrichtungen können so an die zu einem ersten Gerät erfasste Farbinformation angepasst werden.

Insbesondere Mobiltelefone werden in verschiedenen Farben angeboten. Der Benutzer entscheidet sich bewusst für eine Farbe, die dann mittels des erfindungsgemäßen Verfahrens in vorteilhafter Weise automatisch als Primärfarbe zur Bestimmung der Grundtonalität des Benutzermenüs auf dem Display eingesetzt wird. Wird die Geräteschale gewechselt, was bei vielen Mobiltelefonen möglich ist, oder ein Etui oder eine Gerätehülle mit anderer Farbe eingesetzt, so kann die Anpassung der Ausgabevorrichtung durch das erfindungsgemäße Verfahren an die neue Farbe in vorteilhafter Weise automatisch erfolgen.

## Patentansprüche

1. Verfahren zur Steuerung mindestens eines Parameters einer optischen Ausgabeeinrichtung, die zu einer Vorrichtung gehört oder an eine Vorrichtung anschließbar ist,
**dadurch gekennzeichnet,**
**dass** Daten bezüglich mindestens einer Eigenschaft einer Oberfläche, die zumindest ein Teil eines Gehäuses der Vorrichtung ist, erfasst und derart verarbeitet werden, dass der Parameter der Ausgabeeinrichtung anhand dieser erfassten Daten gesteuert wird.

2. Verfahren nach Anspruch 1, **dadurch gekennzeichnet, dass** die Eigenschaft der Oberfläche und der Parameter der Ausgabeeinrichtung jeweils mindestens ein optisch wahrnehmbares Signal umfassen, wobei das von der Ausgabeeinrichtung ausgegebene Signal anhand der erfassten Daten an das Signal der Oberfläche angepasst wird.

3. Verfahren nach Anspruch 2, **dadurch gekennzeichnet, dass** das Signal mindestens eine Farbe und/oder mindestens eine Form und/oder mindestens eine Oberflächenstruktur umfasst.

4. Verfahren nach Anspruch 2 oder 3, **dadurch gekennzeichnet, dass** das Signal mittels einer Einrichtung zur Erkennung optischer Signale erfasst und ein an das erfasste Signal angepasstes Signal auf einem Fernsehbildschirm, einem Computermonitor und/oder einem sonstigen Display angezeigt wird.

5. Verfahren nach Anspruch 4, **dadurch gekennzeichnet, dass** das angezeigte Signal einen Hintergrund einer Benutzeroberfläche umfasst.

6. Verfahren nach einem der vorherigen Ansprüche, **dadurch gekennzeichnet, dass** die Farbe eines Teils der inneren und/oder äußeren Oberfläche eines Gehäuses einer elektronischen Vorrichtung, welche eine Benutzeroberfläche aufweist oder an eine Benutzeroberfläche anschließbar ist, erfasst wird, und dass zumindest die Hintergrundfarbe der Benutzeroberfläche automatisch an die erfasste Farbe des Gehäuses angepasst wird.

7. Vorrichtung mit einem Gehäuse mit mindestens einer Oberfläche, umfassend zumindest eine Steuereinheit und eine Erfassungseinrichtung, wobei die Vorrichtung eine optische Ausgabeeinrichtung aufweist oder an eine optische Ausgabeeinrichtung anschließbar ist,
**dadurch gekennzeichnet,**
**dass** die Erfassungseinrichtung derart ausgebildet ist, dass durch sie Daten bezüglich mindestens einer Eigenschaft der Oberfläche des Gehäuses erfassbar und an die Steuereinheit übermittelbar sind, welche derart konfiguriert ist, dass durch sie die Ausgabeeinrichtung anhand der erfassten Daten zumindest teilweise steuerbar ist.

8. Vorrichtung nach Anspruch 7, **dadurch gekennzeichnet, dass** die Erfassungseinrichtung eine Einrichtung zur Erkennung optischer Signale umfasst, vorzugsweise einen Fotosensor und/oder eine Fotokamera und/oder einen anderen optischen Sensor.

9. Vorrichtung nach Anspruch 7, **dadurch gekennzeichnet, dass** die Erfassungseinrichtung ein Lesegerät umfasst, vorzugsweise einen RFID-Reader und/oder einen mechanischen Abtaster.

10. Vorrichtung nach einem der Ansprüche 7 bis 9, **dadurch gekennzeichnet, dass** die Ausgabeeinrichtung ein Fernsehbildschirm, ein Computermonitor und/oder ein sonstiges Display ist.

11. Vorrichtung nach einem der Ansprüche 7 bis 10, **dadurch gekennzeichnet, dass** mittels der Erfassungseinrichtung die Farbe zumindest eines Teils der Oberfläche des Vorrichtungsgehäuses erfassbar ist, und dass zumindest die Hintergrundfarbe einer auf der Ausgabeeinrichtung anzeigbaren Benutzeroberfläche von der Steuereinheit an die erfasste Farbe des Gehäuses anpassbar ist.

12. Vorrichtung nach einem der Ansprüche 7 bis 11, **dadurch gekennzeichnet, dass** sie ein Mobiltelefon ist, wobei zumindest die Hintergrundfarbgebung des Displays von der Steuereinheit automatisch an die erfasste Eigenschaft des Gehäuses anpassbar ist.

13. Vorrichtung nach Anspruch 12, **dadurch gekennzeichnet, dass** die Hintergrundfarbgebung des Displays von der Steuereinheit automatisch an die erfasste Eigenschaft einer auswechselbaren Gehäuseschale des Mobiltelefons anpassbar ist.
